# FASCICULE DE BREVET EUROPEEN

(11) **EP 1 787 801 B1**
(45) Date de publication et mention de la délivrance du brevet: **19.08.2009**
(21) Numéro de dépôt: 06124424.0
(22) Date de dépôt: 20.11.2006
(51) Int. Cl.: B32B 15/08, B32B 3/30, B65D 65/40, B65D 5/44

(54) **Caisse à partir d'une plaque en materiau composite**
Kiste aus einer Verbundplatte
Box from composite material sheet

(30) Priorité: 18.11.2005 FR 0553505
(43) Date de publication de la demande: 23.05.2007
(73) Titulaire: DS Smith Kaysersberg, 68320 Kunheim (FR)
(72) Inventeur: Schmidt-Morgenroth, Edouard, 68910, LABAROCHE (FR); Maire, M. Christian, 68370, ORBEY (FR)
(74) Mandataire: David, Daniel

(56) Documents cités:
- DE-A1- 2 230 901
- US-A1- 2004 076 800
- ANONYMOUS: "Introducing Rigilite" ARTICLE DU INTERNET, [Online] page 1, XP002397027 11-2004 Extrait de l'Internet: URL:www.temprotech.com/documents/TPT%20Int roducing%20Rigilite.pdf>
- PATENT ABSTRACTS OF JAPAN vol. 016, no. 041 (M-1206), 31 janvier 1992 (1992-01-31) & JP 03 247442 A (YUKIO YAMAMOTO), 5 novembre 1991 (1991-11-05)

## Description

La présente invention porte sur une plaque ou un panneau en matériau composite et son application comme matériau d'emballage.

On connaît des plaques composites constituées d'une âme en matière plastique revêtue d'une ou deux feuilles métalliques, l'ensemble étant rendue solidaire par collage ou autre moyen équivalent. Ces plaques sont utilisées généralement comme panneaux supports d'information, publicitaires ou enseignes par exemple. Elles allient la légèreté du matériau plastique à la dureté du métal. Un traitement de la surface approprié autorise tout type d'impression.

On améliore ce type de plaque composite, en recherchant une structure à la fois rigide, légère, d'excellente planéité, et de faible coût.

La plaque composite comporte une couche en matériau plastique et au moins sur une face une feuille métallique, dont la couche en matériau plastique comprend au moins une plaque alvéolaire.

Les plaques alvéolaires sont connues. Elles sont en matière plastique, notamment en polyoléfine comme le polypropylène, et on les emploie en particulier dans le domaine de l'emballage en tant que substitut du carton ondulé. Une telle plaque comprend deux feuilles planes, dites de couverture reliées et maintenues à distance l'une de l'autre par des entretoises parallèles entre elles. Elles sont généralement perpendiculaires aux deux feuilles de couverture. Selon les applications, la plaque peut comprendre une ou plusieurs feuilles intercalées entre les deux couvertures.

Selon une autre forme de réalisation les alvéoles sont réalisées sous forme de bulles. La plaque alvéolaire est composée de deux feuilles de couverture planes et d'une feuille intercalaire calandrée sur une face ou deux avec des bossages en forme de cylindres de hauteur et de diamètre déterminés.

On a constaté avec surprise qu'une plaque alvéolaire, même relativement légère et fine, permettait, en étant combinée à une mince feuille métallique sur une ou les deux faces, d'obtenir des résultats excellents aussi bien en terme de planéité que de rigidité.

Les applications d'une telle plaque sont les mêmes que pour les plaques composites de l'art antérieur, en particulier comme support de communication. Elle convient particulièrement bien dans le domaine de l'emballage.

On réalise une caisse selon l'invention, formée par une telle plaque et dont la face extérieure au moins est formée d'une feuille métallique.

La plaque est d'épaisseur comprise entre 3 et 20 mm, pour une épaisseur de la feuille métallique comprise entre 0,2 et 0,5 mm.

La plaque comporte des rainages formant lignes de pliage, permettant le pliage de panneaux autour de ces lignes et la mise en volume pour confectionner une caisse. Plus particulièrement les rainages ont été creusés par enlèvement de matière depuis une face, au plus jusqu'à la feuille métallique de la face opposée.

D'autres caractéristiques et avantages ressortiront de la description qui suit d'un mode de réalisation non limitatif en référence aux dessins sur lesquels
La figure 1 représente vue en perspective une plaque conforme à l'invention;
La figure 2 montre une plaque découpée et rainée pour la formation d'une caisse ;
La figure 3 montre le détail d'un rainage creusé dans la plaque ;
La figure 4 montre une barquette formée avec la plaque de l'invention.

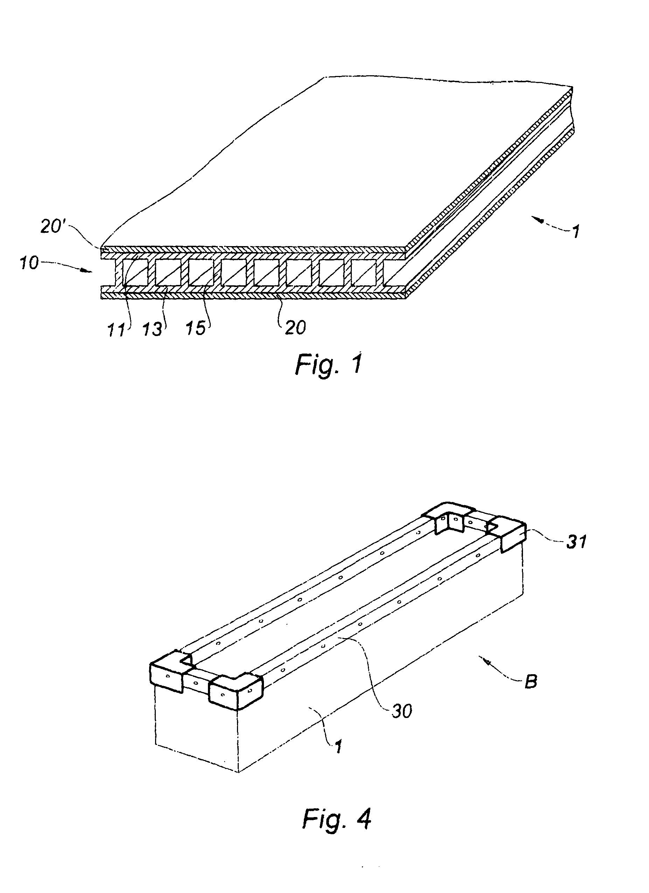

La plaque composite 1 que l'on voit sur la figure 1 comporte une âme 10 constituée d'une plaque alvéolaire. Ce type de plaque alvéolaire comprend deux couvertures planes 11 et 13 espacées l'une de l'autre et reliées par des entretoises 15 parallèles entre elles. Les couvertures et les entretoises ménagent entre elles des canaux longitudinaux que l'on désigne aussi alvéoles. Les plaques sont obtenues par extrusion d'une matière plastique à l'état pâteux, généralement par chauffage, à travers une filière d'extrusion plane entre les lèvres de laquelle sont disposés les poinçons définissant la forme des alvéoles. En sortie de filière la matière encore à l'état pâteux est engagée entre deux panneaux de calibrage pourvus d'orifices d'aspiration.

La matière est maintenue en forme pendant sa progression entre les panneaux de calibrage jusqu'à sa solidification. La matière est avantageusement une polyoléfine telle que le polypropylène. La demanderesse commercialise des plaques alvéolaires en cette matière sous la marque Akylux ®.

Selon le mode de réalisation représenté, l'âme 10 est revêtue sur chaque face d'une mince feuille métallique 20, 20' respectivement. Il s'agit de préférence d'une feuille d'aluminium que l'on a déposée et collée. La fabrication des plaques composites peut se faire en ligne après extrusion et calibrage de la plaque alvéolaire ou bien hors ligne, selon l'installation dont on dispose. On lie la feuille métallique avantageusement par l'intermédiaire d'une couche de matière adhésive. Il s'agit par exemple d'une colle.

On donne ci-après les caractéristiques mécaniques de trois plaques composites réalisées conformément à l'invention. Ces plaques comprennent une âme alvéolaire, extrudée, en polypropylène contrecollée de deux feuilles d'aluminium.

| Epaisseur âme | 3,5 mm | 5 mm | 10 mm |
|---|---|---|---|
| Epaisseur d'une feuille d'aluminium | 0,27 mm | 0,27 | 0,27 |
| Poids/m2 (kg/m2) | 1,9 | 2,65 | 3,45 |
| Rigidité E.I (N.m2) | 0,015 | 0,099 | 0,386 |
| Module élasticité (Mpa) | 70.000 | 70.000 | 70.000 |
| Force de résistance au pelage (N) | 116,4 | 188,4 | 124,7 |
| Résistance traction perpendiculaire | 6.600 | 12.200 | 9.600 |
| Résistance traction Rm (Mpa) | 150-200 | 150-200 | 150-200 |

On constate que malgré la légèreté, les propriétés mécaniques sont remarquables.

L'autre type de plaque alvéolaire comportant des alvéoles cylindriques perpendiculaires aux feuilles de couverture n'est pas représenté ici.

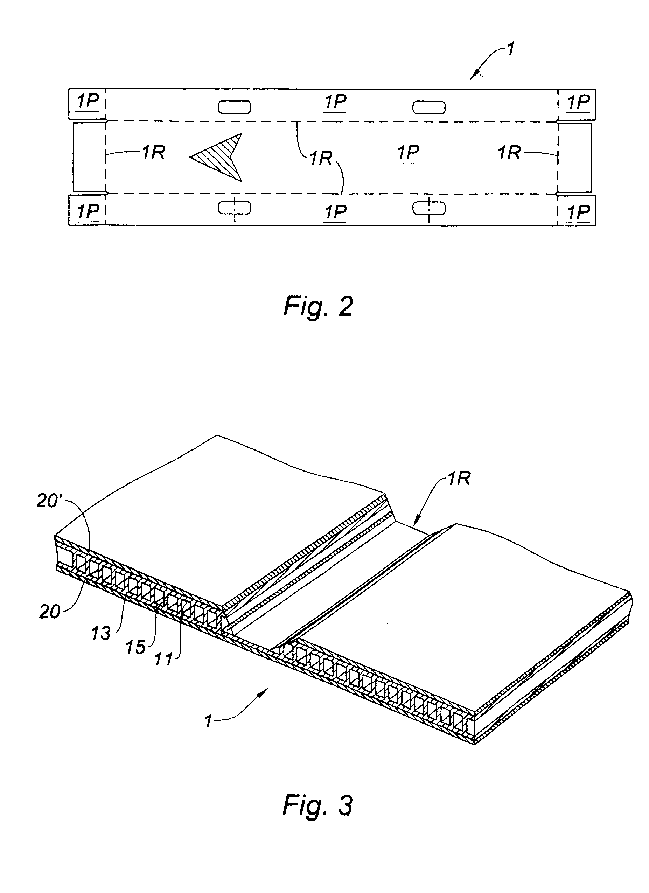

On décrit la réalisation d'une barquette en ce matériau en référence aux figures 2 et 3.

On a découpé une plaque composite selon l'une des réalisation précédentes. Pour une plaque à deux feuilles d'aluminium, la découpe est effectuée avantageusement dans un centre d'usinage à commande numérique. Dans le cas d'une plaque avec une feuille métallique sur une seule face, celle-ci peut être effectuée au moyen d'une presse de découpe. La plaque 1 est rainée le long de lignes 1R de pliage de manière à délimiter une pluralité de panneaux 1P. Comme on le voit sur la figure 2, la plaque comprend un panneau central rectangulaire bordé de panneaux latéraux. Deux panneaux latéraux sont prolongés par des volets. Une telle plaque rainurée est en soi connue pour le carton par exemple mais pas pour le matériau composite de l'invention.

De préférence les rainages 1R sont réalisés par usinage de la plaque depuis une face. On a représenté sur la figure 3, la forme d'un rainage 1R ménagé dans la plaque 1 avec son âme 10 et deux feuilles 20 et 20' en recouvrant les deux faces. Le rainage 1R est de préférence obtenu par enlèvement de matière plutôt que par écrasement. Ici on a découpé la plaque depuis la feuille 20' sur une profondeur de 70%. Les flancs de la découpe sont inclinés de façon que le rainage 1R ait une forme évasée. Par exemple pour une plaque de 5 mm, on conserve en fond de rainage une épaisseur de 1,5 mm, soit la feuille 20 et la couverture de l'âme alvéolaire 10. La largeur du rainage est de 8 mm dans la feuille 20'. Elle est un peu plus faible en fond de rainage. On dégage ainsi suffisamment de matière pour permettre un pliage de la plaque 1 à angle droit, sans affaiblir la plaque en cet endroit.

Après avoir mis la barquette en volume en dressant les panneaux latéraux à angle droit par rapport au panneau central et rabattu les volets prolongeant deux des panneaux latéraux, on peut maintenir les éléments en position assemblée au moyen d'accessoires appropriés tels que des profilés 30 à section en U et des coins 31 de gerbage qui sont rivetés sur le sommet des panneaux avec éventuellement des trièdres de protection des angles inférieurs, fixés par rivetage. On obtient la barquette B représentée sur la figure 4 qui grâce à la nature composite des panneaux est exceptionnellement résistante au regard de la légèreté de l'ensemble. On peut renforcer la caisse en doublant les bords latéraux si nécessaire. On reste encore très léger.

Par exemple une plaque d'épaisseur 5 mm revêtue sur ses deux faces d'une feuille d'aluminium de 0,27 mm d'épaisseur montée en barquette conformément à l'invention avec un cadre supérieur maintenant le tout en volume et de dimensions 600 mm X 400 mm X 300 mm a une résistance à la compression verticale supérieure à 5 tonnes.

Il ne s'agit bien sûr que d'une réalisation parmi un grand nombre envisageable avec ce matériau composite.

## Revendications

1. Caisse réalisée avec une plaque composite (1) comportant une couche en matériau plastique et au moins sur une face une feuille métallique (20, 20'), **caractérisée par le fait que** la couche en matériau plastique comprend au moins une plaque alvéolaire (10), d'épaisseur comprise entre 3 et 20mm, l'épaisseur de la feuille métallique (20, 20') étant comprise entre 0,2 et 0,5mm, des rainages (1R) formant lignes de pliage, étant ménagés dans la plaque alvéolaire de manière à permettre le pliage de panneaux (1P) autour de ces lignes (1R) et la mise en volume pour confectionner la caisse.

2. Caisse selon la revendication précédente dont les rainages (1R) de la plaque ont été creusés par enlèvement de matière depuis une face (20') jusqu'à, au plus la feuille métallique (20) de la face opposée.

3. Caisse selon l'une des revendications précédentes dont la face extérieure au moins est formée d'une feuille métallique (20 ; 20').

4. Caisse selon l'une des revendications précédentes dont les panneaux pliés (1P) sont maintenus en position dressée au moyen de profilés (30) à section en U.

5. Caisse selon la revendication précédente dont les profilés (30) à section en U sont associés à des coins (31) dans les angles de la caisse.

## Claims

1. A box made with a composite plate (1) comprising a plastic material layer and at least on one side a metal sheet (20, 20'), **characterised in that** the plastic material layer comprises at least one cellular plate (10), having a thickness between 3 and 20 mm, the thickness of the metal sheet (20, 20') being between 0.2 and 0.5 mm, with scores (1R) forming folding lines, being provided in the cellular plate so as to enable panels (1P) to be folded about these lines (1R) and a volume to be formed for making the box.

2. The box according to the preceding claim, wherein the scores (1R) of the plate have been dug by removing material from a side (20') up to, at most the metal sheet (20) of the opposite face.

3. The box according to any of the preceding claims, wherein at least the outer face is formed from a metal sheet (20; 20').

4. The box according to any of the preceding claims, wherein the folding panels (1P) are held in an upright position by means of U-section beams (30).

5. The box according to the preceding claim, wherein the U-shape beams (30) are associated with corners (31) at the angles of the box.

## Patentansprüche

1. Kiste, hergestellt aus einer Verbundplatte (1), die eine Kunststoffschicht und zumindest auf einer Seite eine Metallfolie (20, 20') umfasst, **dadurch gekennzeichnet, dass** die Kunststoffschicht mindestens eine Bienenwabenplatte (10) mit einer Dicke zwischen 3 und 20 mm umfasst, wobei die Dicke der Metallfolie (20, 20') zwischen 0,2 und 0,5 mm liegt, wobei Falzlinien bildende Rillen (1R) in der Bienenwabenplatte eingerichtet sind, um das Falzen der Platten (1 P) um diese Linien (1R) herum und das Aufstellen zum Anfertigen der Kiste zu ermöglichen.

2. Kiste nach dem vorhergehenden Anspruch, wobei die Rillen (1R) der Platte durch Materialabhebung von einer Seite (20') bis höchstens zur Metallfolie (20) der gegenüberliegenden Seite ausgehöhlt wurden.

3. Kiste nach einem der vorhergehenden Ansprüche, wobei die Außenseite mindestens aus einer Metallfolie (20; 20') gebildet wird.

4. Kiste nach einem der vorhergehenden Ansprüche, wobei die gefalteten Platten (1P) über Profile (30) mit U-förmigem Querschnitt in der aufgerichteten Position gehalten werden.

5. Kiste nach dem vorhergehenden Anspruch, wobei die Profile (30) mit U-förmigem Querschnitt mit Eckstücken (31) in den Ecken der Kiste verbunden sind.
